# EUROPEAN PATENT APPLICATION

(11) **EP 4 231 742 A1**
(43) Date of publication of application: **23.08.2023**
(21) Application number: 20957119.9
(22) Date of filing: 15.10.2020
(51) Int. Cl.: H04W 72/04

(54) **CROSS-CARRIER SCHEDULING METHOD AND DEVICE, AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: dompatent von Kreisler Selting Werner - Partnerschaft von Patent- und Rechtsanwälten mbB
(86) International application number: PCT/CN2020/121163
(87) International publication number: WO 2022/077340

(57) **Abstract**

The present invention provides a cross-carrier scheduling method and apparatus, and a storage medium. The cross-carrier scheduling method includes: transmitting target downlink control information (DCI) corresponding to a first secondary carrier to a terminal, where the first secondary carrier is any one of at least one secondary carrier for communication between the base station and the terminal, where the target DCI indicates a target carrier that is scheduled by a physical downlink control channel (PDCCH) carried on the first secondary carrier, and where the target carrier is a primary carrier for communication between the base station and the terminal or a second secondary carrier among the at least one secondary carrier. The present invention achieves the purpose of scheduling, via a secondary carrier, the primary carrier or another secondary carrier in a cross-carrier way, which, especially in DSS scenarios, effectively alleviates the problem of insufficient PDCCH resources of the primary carrier.

## Description

### TECHNICAL FIELD

The present invention relates to the field of communications, and in particular, to cross-carrier scheduling methods, apparatuses and storage media.

### BACKGROUND

At present, 5G (5th generation mobile networks) NR (New Radio) and LTE (Long Term Evolution) may coexist in the same spectrum, so that these two technologies can dynamically share a total spectrum capacity, which provides higher spectrum efficiency. Dynamic spectrum sharing (DSS) provides an especially useful transition path from the LTE to the NR by allowing the LTE and the NR to share the same carrier.

For the 5G NR in the third generation partnership project (3GPP), a plurality of component carriers (CCs) are aggregated and used together through a carrier aggregation (CA) technology, which increases a system bandwidth and a network capacity effectively, and provides effective support for high-speed data transmission. In a CA scenario, a terminal may transmit/receive data on the plurality of CCs at the same time.

In the 5G NR, the CC is also known as a cell. 5G NR Release 15 (R15) also introduces Dual Connectivity (DC), that is, one terminal may keep connectivity with two base stations: a master base station and a secondary base station. All of the CCs belonging to the master base station form a master cell group (MCG), and all of the CCs belonging to the secondary base station form a secondary cell group (SCG).

In the above CA and/or DC scenarios, the plurality of carriers between each base station and the terminal include a primary carrier that carries main information communicated between the base station and the terminal. Generally, there is only one primary carrier between each base station and the terminal, with the other carriers called secondary carriers. For a current base station acting as the master base station, the primary carrier between the master base station and the terminal is called a primary cell (PCell), and the secondary carriers between the master base station and the terminal are called secondary cells (SCells). For the current base station acting as the secondary base station, the primary carrier between the secondary base station and the terminal is called a primary secondary cell (PSCell), and the secondary carriers between the secondary base station and the terminal are called the SCells.

In NR R15 and R16, it is supported to schedule, via the PCell or the PSCell, the SCell in a cross-carrier way, or to schedule, via one of the SCells, another SCell in the cross-carrier way.

### SUMMARY

In view of problems in the related art, examples of the present invention provide a cross-carrier scheduling method and apparatus, and a storage medium.

According to a first aspect of the examples of the present invention, a cross-carrier scheduling method is provided. The method is applicable to a base station, including:
transmitting target downlink control information (DCI) corresponding to a first secondary carrier to a terminal,
where the first secondary carrier is any one of at least one secondary carrier for communication between the base station and the terminal, where the target DCI indicates a target carrier that is scheduled by a physical downlink control channel (PDCCH) carried on the first secondary carrier, and where the target carrier is a primary carrier for communication between the base station and the terminal or a second secondary carrier among the at least one secondary carrier.

Optionally, the target DCI includes a target information field and a carrier indicator field which jointly indicate a carrier identifier of the target carrier.

Optionally, the target DCI includes a carrier indicator field which indicates a carrier identifier of the target carrier.

Optionally, the method further includes:
determining correspondences between bit values of the carrier indicator field and a carrier identifier of the primary carrier and a carrier identifier of each secondary carrier; and
transmitting the correspondences to the terminal through a target signaling.

Optionally, the target DCI indicates at least one of a format of or one or more resources of a data transmission corresponding to the target carrier that is scheduled by the PDCCH carried on the first secondary carrier.

According to a second aspect of the examples of the present invention, a cross-carrier scheduling method is provided. The method is applicable to a terminal, including:
receiving target downlink control information (DCI) corresponding to a first secondary carrier and transmitted by a base station, where the first secondary carrier is any one of at least one secondary carrier for communication between the base station and the terminal; and
determining, based on the target DCI, a target carrier that is scheduled, where the target carrier is a primary carrier for communication between the base station and the terminal or a second secondary carrier among the at least one secondary carrier.

Optionally, the target DCI includes a target information field and a carrier indicator field which jointly indicate a carrier identifier of the target carrier; and
determining, based on the target DCI, the target carrier that is scheduled includes:
taking the primary carrier as the target carrier in response to determining that a bit value of the target information field is equal to a first preset value and a bit value of the carrier indicator field is equal to a second preset value; and
determining one secondary carrier from the at least one secondary carrier as the target carrier based on the bit value of the carrier indicator field in response to determining that the bit value of the target information field is equal to a third preset value.

Optionally, the target DCI includes a carrier indicator field which indicates a carrier identifier of the target carrier; and
determining, based on the target DCI, the target carrier that is scheduled includes:
determining a target carrier identifier corresponding to a bit value of the carrier indicator field in the target DCI in accordance with correspondences between bit values of the carrier indicator field and a carrier identifier of the primary carrier and a carrier identifier of each secondary carrier; and
determining the target carrier based on the target carrier identifier.

Optionally, the method further includes:
determining the correspondences according to a predefined configuration; or
receiving the correspondences transmitted by the base station through a target signaling.

Optionally, after determining the target carrier that is scheduled, the method further includes:
determining at least one of a format of or one or more resources of a data transmission corresponding to the target carrier based on an indication of a physical downlink control channel (PDCCH) carried on the first secondary carrier.

According to a third aspect of the examples of the present invention, a cross-carrier scheduling apparatus is provided. The apparatus is applicable to a base station, including:
a first transmitting module, configured to transmit target downlink control information (DCI) corresponding to a first secondary carrier to a terminal,
where the first secondary carrier is any one of at least one secondary carrier for communication between the base station and the terminal, where the target DCI indicates a target carrier that is scheduled by a physical downlink control channel (PDCCH) carried on the first secondary carrier, and where the target carrier is a primary carrier for communication between the base station and the terminal or a second secondary carrier among the at least one secondary carrier.

Optionally, the target DCI includes a target information field and a carrier indicator field which jointly indicate a carrier identifier of the target carrier.

Optionally, the target DCI includes a carrier indicator field which indicates a carrier identifier of the target carrier.

Optionally, the apparatus further includes:
a first determining module, configured to determine correspondences between bit values of the carrier indicator field and a carrier identifier of the primary carrier and a carrier identifier of each secondary carrier; and
a second transmitting module, configured to transmit the correspondences to the terminal through a target signaling.

Optionally, the target DCI is for at least one of a format of or one or more resources of a data transmission corresponding to the target carrier that is scheduled by the PDCCH carried on at least the first secondary carrier.

According to a fourth aspect of the examples of the present invention, a cross-carrier scheduling apparatus is provided. The apparatus is applicable to a terminal, including:
a first receiving module, configured to receive target downlink control information (DCI) corresponding to a first secondary carrier and transmitted by a base station, where the first secondary carrier is any one of at least one secondary carrier for communication between the base station and the terminal; and
a second determining module, configured to determine, based on the target DCI, a target carrier that is scheduled, where the target carrier is a primary carrier for communication between the base station and the terminal or a second secondary carrier among the at least one secondary carrier.

Optionally, the target DCI includes a target information field and a carrier indicator field which jointly indicate a carrier identifier of the target carrier; and
the second determining module includes:
a first determining submodule, configured to take the primary carrier as the target carrier in response to determining that a bit value of the target information field is equal to a first preset value and a bit value of the carrier indicator field is equal to a second preset value; and
a second determining submodule, configured to determine one secondary carrier from the at least one secondary carrier as the target carrier based on the bit value of the carrier indicator field in response to determining that the bit value of the target information field is equal to a third preset value.

Optionally, the target DCI includes a carrier indicator field which indicates a carrier identifier of the target carrier; and
the second determining module includes:
a third determining submodule, configured to determine a target carrier identifier corresponding to a bit value of the carrier indicator field in the target DCI in accordance with correspondences between bit values of the carrier indicator field and a carrier identifier of the primary carrier and a carrier identifier of each secondary carrier; and
a fourth determining submodule, configured to determine the target carrier based on the target carrier identifier.

Optionally, the apparatus further includes:
a fourth determining module, configured to determine the correspondences according to a predefined configuration; or
a second receiving module, configured to receive the correspondences transmitted by the base station through a target signaling.

Optionally, the apparatus further includes:
a third determining module, configured to determine at least one of a format of or one or more resources of a data transmission corresponding to the target carrier based on an indication of a physical downlink control channel (PDCCH) carried on the first secondary carrier.

According to a fifth aspect of the examples of the present invention, a computer-readable storage medium storing a computer program is provided. The computer program is configured to execute any one of the cross-carrier scheduling methods described in the above first aspect.

According to a sixth aspect of the examples of the present invention, a computer-readable storage medium storing a computer program is provided. The computer program is configured to execute any one of the cross-carrier scheduling methods described in the above second aspect.

According to a seventh aspect of the examples of the present invention, a cross-carrier scheduling apparatus is provided, including:
one or more processors; and
one or more memories for storing instructions executable by the one or more processors.

The one or more processors are configured to execute any one of the cross-carrier scheduling methods described in the above first aspect.

According to an eighth aspect of the examples of the present invention, a cross-carrier scheduling apparatus is provided, including:
one or more processors; and
one or more memories for storing instructions executable by the one or more processors.

The one or more processors are configured to execute any one of the cross-carrier scheduling methods described in the above second aspect.

The technical solutions provided by the examples of the present invention may obtain the following beneficial effects.

In one or more examples of the present invention, the base station may transmit the target DCI corresponding to the first secondary carrier to the terminal, where the first secondary carrier is any one of at least one secondary carrier for communication between the base station and the terminal, the target DCI may indicate the target carrier that is scheduled by the PDCCH carried on the first secondary carrier, and the target carrier may be the primary carrier or the second secondary carrier. The present invention achieves the purpose of scheduling, via a secondary carrier, the primary carrier or another secondary carrier in the cross-carrier way, which, especially in dynamic spectrum sharing (DSS) scenarios, effectively alleviates the problem of insufficient PDCCH resources of the primary carrier.

In one or more examples of the present invention, the base station may indicate the carrier identifier of the target carrier under the cross-carrier scheduling by means of the target information field in conjunction with the carrier indicator field in the target DCI. Alternatively, the base station may indicate the carrier identifier of the target carrier under the cross-carrier scheduling merely by means of the carrier indicator field in the target DCI, which is simple but has a high availability.

In one or more examples of the present invention, in the case where the base station indicates the carrier identifier of the target carrier under the cross-carrier scheduling merely by means of the carrier indicator field in the target DCI, the base station may determine the correspondences between the bit values of the carrier indicator field and the carrier identifier of the primary carrier and the carrier identifier of each secondary carrier, and transmit the correspondences to the terminal through the target signaling, which achieves the purpose of scheduling the primary carrier or another secondary carrier in the cross-carrier way through the target DCI corresponding to the secondary carrier.

In one or more examples of the present invention, the terminal may receive the target DCI corresponding to the first secondary carrier and transmitted by the base station, and then determine the scheduled target carrier based on the target DCI, where the target carrier may be the primary carrier or the second secondary carrier among the at least one secondary carrier. Thereby, it achieves the purpose of scheduling, via a secondary carrier, the primary carrier or another secondary carrier in the cross-carrier way, which, especially in DSS scenarios, effectively alleviates the problem of insufficient PDCCH resources of the primary carrier.

In one or more examples of the present invention, the terminal may determine the scheduled target carrier based on the target information field in conjunction with the carrier indicator field included in the target DCI. Alternatively, the terminal may determine the scheduled target carrier based on the carrier indicator field included in the target DCI, which is simple but has a high availability.

In one or more examples of the present invention, when determining the scheduled target carrier based on the carrier indicator field included in the target DCI, the terminal may determine the target carrier in accordance with the correspondences between the bit values of the carrier indicator field and the carrier identifier of the primary carrier and the carrier identifier of each secondary carrier. The correspondences may be determined according to the predefined configuration, or the correspondences which are transmitted by the base station through the target signaling may be received. Thereby, it achieves the purpose of scheduling, via a secondary carrier, the primary carrier or another secondary carrier in the cross-carrier way.

It should be understood that the above general description and the following detailed description are only illustrative and explanatory, and are not intended to limit the present invention.

### BRIEF DESCRIPTION OF THE DRAWINGS

The accompanying drawings, which are incorporated in and constitute a part of this specification, illustrate examples consistent with the present invention and, together with the description, serve to explain the principles of the invention.
FIG. 1 illustrates a schematic flowchart of a cross-carrier scheduling method according to an example.
FIG. 2 illustrates a schematic flowchart of another cross-carrier scheduling method according to an example.
FIG. 3 illustrates a schematic flowchart of another cross-carrier scheduling method according to an example.
FIG. 4 illustrates a schematic flowchart of another cross-carrier scheduling method according to an example.
FIG. 5 illustrates a schematic flowchart of another cross-carrier scheduling method according to an example.
FIG. 6 illustrates a schematic flowchart of another cross-carrier scheduling method according to an example.
FIG. 7 illustrates a schematic flowchart of another cross-carrier scheduling method according to an example.
FIG. 8 illustrates a block diagram of a cross-carrier scheduling apparatus according to an example.
FIG. 9 illustrates a block diagram of another cross-carrier scheduling apparatus according to an example.
FIG. 10 illustrates a schematic structure diagram of a cross-carrier scheduling apparatus according to an example of the present invention.
FIG. 11 illustrates a schematic structure diagram of another cross-carrier scheduling apparatus according to an example of the present invention.

### DETAILED DESCRIPTION OF THE EMBODIMENTS

Embodiments will be described in detail here with the examples thereof illustrated in the drawings. When the following descriptions involve the drawings, like numerals in different drawings refer to like or similar elements unless otherwise indicated. The implementations described in the following examples do not represent all implementations consistent with the present invention. Rather, they are merely examples of apparatuses and methods consistent with some aspects of the present invention as detailed in the appended claims.

The terms used in the present invention are for the purpose of describing particular examples only, and are not intended to limit the present invention. Terms determined by "a", "said" and "the" in their singular forms in the present invention and the appended claims are also intended to include their plural forms, unless clearly indicated otherwise in the context. It should also be understood that the term "and/or" as used herein is and includes any and all possible combinations of one or more of the associated listed items.

It is to be understood that, although terms "first", "second", "third", and the like may be used in the present invention to describe various information, such information should not be limited to these terms. These terms are only used to distinguish information of the same category with each other. For example, without departing from the scope of the present invention, first information may be referred as second information; and similarly, second information may also be referred as first information. Depending on the context, the word "if' as used herein may be interpreted as "when", "upon", or "in response to determining".

The present invention provides a cross-carrier scheduling scheme, in which via a secondary carrier, a primary carrier or another secondary carrier may be scheduled in a cross-carrier way. Especially in dynamic spectrum sharing (DSS) scenarios, the problem of insufficient physical downlink control channel (PDCCH) resources of the primary carrier is effectively alleviated.

In the examples of the present invention, the cross-carrier scheduling means that resources of a PDCCH carried on a certain carrier are used to schedule another carrier, and furthermore to schedule at least one of a format of or one or more resources of a data transmission corresponding to another carrier. The format of the data transmission corresponding to another carrier may be one of a plurality of transmission formats specified in the current standards, and is indicated by the PDCCH. The one or more resources of the data transmission corresponding to another carrier includes, but is not limited to, at least one of physical uplink shared channel (PUSCH) resources or physical downlink shared channel (PDSCH) resources on another carrier.

The cross-carrier scheduling solution provided by the present invention is first described from a base station side.

The examples of the present invention provide a cross-carrier scheduling method, which may be applied to a base station. In the examples of the present invention, the base station may be a master base station or a secondary base station opposite to a terminal, which is not limited by the present invention. The method may include the following steps.

At step 101, target downlink control information (DCI) corresponding to a first secondary carrier is transmitted to a terminal.

In the examples of the present invention, the first secondary carrier is any one of at least one secondary carrier for communication between the base station and the terminal. The target DCI may indicate that a target carrier is scheduled by a PDCCH carried on the first secondary carrier. The target carrier is a primary carrier for communication between the base station and the terminal or a second secondary carrier among the at least one secondary carrier. The second secondary carrier may be any secondary carrier different from the first secondary carrier.

That is, in the examples of the present invention, the primary carrier or another secondary carrier may be scheduled in the cross-carrier way through the target DCI corresponding to the any secondary carrier. Via a secondary carrier (SCell), the base station schedules the primary cell (PCell) or another SCell in the cross-carrier way when acting as the master base station, and schedules the primary secondary cell (PSCell) or another SCell in the cross-carrier way when acting as the secondary base station.

For example, a plurality of carriers between the base station and the terminal include CC1, CC2, and CC3, where CC1 is the primary carrier, and CC2 and CC3 are the secondary carriers. By the PDCCH carried by the first secondary carrier CC2, the primary carrier CC1 may be scheduled in the cross-carrier way or the secondary carrier CC3 may be scheduled in the cross-carrier way.

Of course, the PDCCH resources carried on CC2 may also be used to schedule itself, i.e., CC2. However, the case where oneself is scheduled by the PDCCH carried by itself may not be considered since the present invention is mainly aimed at the cross-carrier scheduling.

Optionally, the target DCI indicates at least one of a format of or one or more resources of a data transmission corresponding to the target carrier that is scheduled by the PDCCH carried on the first secondary carrier. The format of the data transmission corresponding to the target carrier may be any one of preset data transmission formats, and the one or more resources of the data transmission corresponding to the target carrier may be at least one of PUSCH resources or PDSCH resources.

In the above examples, it achieves the purpose of scheduling, via a secondary carrier, the primary carrier or another secondary carrier in the cross-carrier way which, especially in DSS scenarios, effectively alleviates the problem of insufficient PDCCH resources of the primary carrier.

In the current standards, the DCI corresponding to a certain secondary carrier includes a carrier indicator field (CIF). When the bit value of the CIF is 0, it indicates that the PDCCH carried by the secondary carrier is used to schedule the secondary carrier itself. When the bit value is equal to another value, like 1, 2, 3, etc., it indicates that the secondary carrier schedules another secondary carrier in the cross-carrier way. Similarly, when the bit value of the CIF included in the DCI corresponding to the primary carrier is 0, it indicates that the PDCCH carried by the primary carrier is used to schedule the primary carrier itself. When the bit value of the CIF is equal to another value, like 1, 2, 3, etc., it indicates that the primary carrier schedules a secondary carrier in the cross-carrier way.

For example, the bit value of the CIF in the DCI corresponding to the secondary carrier CC2 is 0, which means that the PDCCH carried by CC2 is used to schedule CC2. If the bit value of the CIF is equal to another value, e.g., 1, it means that the PDCCH resources carried by CC2 are used to schedule another secondary carrier, which, for example, may be CC3 .

In an optional example, the target DCI corresponding to the first secondary carrier may include a target information field and a carrier indicator field which jointly indicate a carrier identifier of the target carrier.

In the example of the present invention, one target information field may be introduced into the DCI corresponding to the secondary carrier, and may occupy at least 1 bit. In the case where the target information field only occupies 1 bit, supposing that a first preset value is 0 and the bit value of the CIF is equal to a second preset value that may also be 0, it means that the target carrier scheduled in the cross-carrier way via the first secondary carrier is the primary carrier. In the above example of the present invention, the second preset value may also be equal to another value, which is not limited in the present invention.

When the bit value of the target information field is a third preset value different from the first preset value, supposing that the third preset value is 1, it can be determined that the target carrier is one of the secondary carriers. In this case, the target carrier may be determined based on the bit value of the CIF. For example, the bit value of the CIF is 1, and the target carrier is CC3 among the secondary carriers.

In the current standards, the number of the primary carrier between each base station and one terminal is one. If the number of the primary carriers increases in the future, it may determine one primary carrier from a plurality of primary carriers as the target carrier based on the bit value of the CIF in the case where the bit value of the target information field is equal to the third preset value. The above case should also belong to the protection scope of the present invention.

In practical applications, the target information field may occupy two or more bits, which is not limited by the present invention.

In an optional example, the target DCI corresponding to the first secondary carrier may include the carrier indicator field which indicates the carrier identifier of the target carrier.

In the example of the present invention, the target information field may not be introduced into the DCI, and thus, the carrier identifier of the target carrier is indicated merely by means of the CIF.

Accordingly, the primary carrier and all the secondary carriers between the base station and the terminal are to be numbered together, so as to determine the carrier identifiers corresponding to different carriers, respectively. In this way, the base station can directly indicate the carrier identifier of the target carrier by means of the bit value of the CIF in the target DCI.

For example, the carrier identifier of the primary carrier CC1 is 1, the carrier identifier of the secondary carrier CC2 is 2, and the carrier identifier of the secondary carrier CC3 is 3. It means that the primary carrier is the target carrier when the bit value of the CIF in the target DCI corresponding to the first secondary carrier CC2 is 1, and means that the secondary carrier CC3 is the target carrier when the bit value of the CIF in the target DCI corresponding to the first secondary carrier CC2 is 3.

In the above examples of the present invention, the base station may indicate the carrier identifier of the target carrier under the cross-carrier scheduling by means of the target information field in conjunction with the carrier indicator field in the target DCI. Alternatively, the base station may indicate the carrier identifier of the target carrier under the cross-carrier scheduling merely by means of the carrier indicator field in the target DCI, which is simple but has a high availability.

In an optional example, the base station may configure the correspondences between the bit values of the carrier indicator field and the carrier identifier of the primary carrier and the carrier identifier of each secondary carrier, and transmit the correspondences to the terminal through a target signaling.

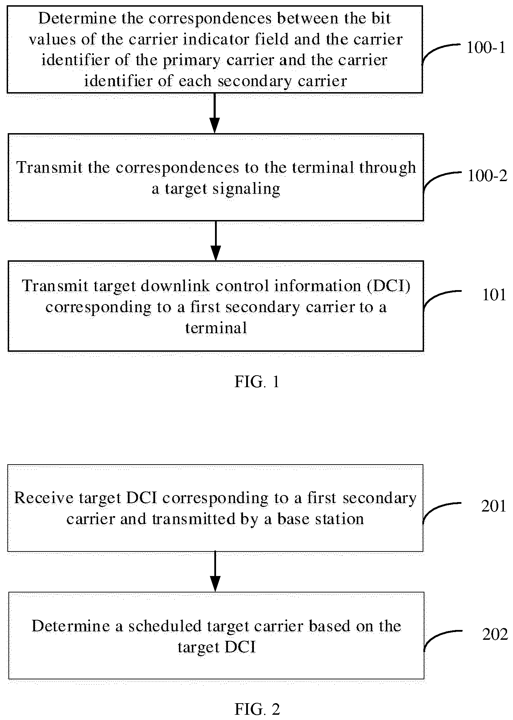

By referring to FIG. 1, which is a flowchart of a cross-carrier scheduling method according to an example, the method may include the following steps.

At step 100-1, the correspondences between the bit values of the carrier indicator field and the carrier identifier of the primary carrier and the carrier identifier of each secondary carrier are determined.

In the example of the present invention, the base station may configure the correspondences between the bit values of the CIF and the carrier identifier of the primary carrier and the carrier identifiers of each secondary carrier.

At step 100-2, the correspondences are transmitted to the terminal through a target signaling.

In the example of the present invention, the target signaling may be a high-layer signaling, including but not limited to a radio resource control (RRC) signaling.

After transmitting the correspondences to the terminal, the base station may indicate the carrier identifier of the target carrier directly by means of the CIF in the target DCI corresponding to the first secondary carrier to perform the cross-carrier scheduling via the secondary carrier.

In the above example, in the case where the base station indicates the carrier identifier of the target carrier under the cross-carrier scheduling merely by means of the carrier indicator field in the target DCI, it may be by the base station to determine the correspondences between the bit values of the carrier indicator field and the carrier identifier of the primary carrier and the carrier identifier of each secondary carrier, and to transmit the correspondences to the terminal through the target signaling, which achieves the purpose of scheduling the primary carrier or another secondary carrier in the cross-carrier way through the target DCI corresponding to the secondary carrier.

The cross-carrier scheduling solution provided by the examples of the present invention is next described from a terminal side.

Another cross-carrier scheduling method is provided by the examples of the present invention. By referring to FIG. 2, which is a flowchart of another cross-carrier scheduling method according to an example, the method may be applied to a terminal, and may include the following steps.

At step 201, target DCI corresponding to a first secondary carrier and transmitted by a base station is received.

In the example of the present invention, the base station may be a master base station or a secondary base station that maintains connectivity with the terminal. The first secondary carrier may be any one of at least one secondary carrier for communication between the base station and the terminal.

At step 202, a scheduled target carrier is determined based on the target DCI.

In the example of the present invention, the target carrier is a primary carrier for communication between the base station and the terminal or a second secondary carrier among the at least one secondary carrier. Optionally, the second secondary carrier is different from the first secondary carrier. The primary carrier is a PCell when the base station is the master base station, and the primary carrier is a PSCell when the base station is the secondary base station.

In the above example, it achieves the purpose of scheduling, via a secondary carrier, the primary carrier or another secondary carrier in the cross-carrier way, which, especially in DSS scenarios, effectively alleviates the problem of insufficient PDCCH resources of the primary carrier.

In an optional example, the target DCI includes a target information field and a carrier indicator field which jointly indicate a carrier identifier of the target carrier.

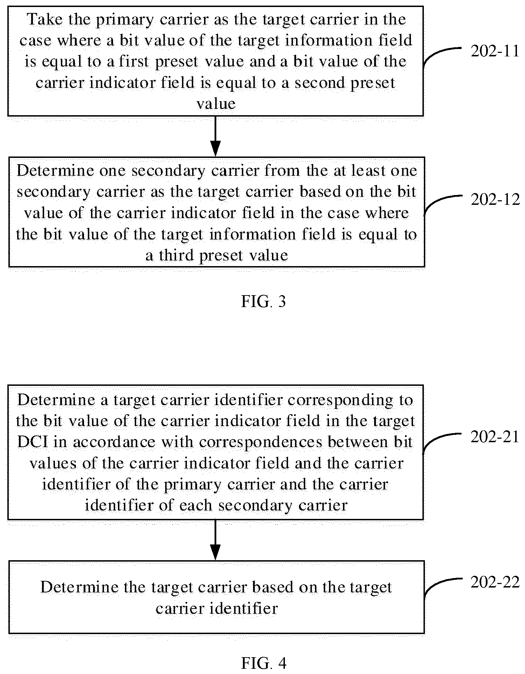

Accordingly, by referring to FIG. 3, which is a flowchart of another cross-carrier scheduling method according to the example illustrated in FIG. 2, step 202 may include the following steps.

At step 202-11, the primary carrier is taken as the target carrier in the case where a bit value of the target information field is equal to a first preset value and a bit value of the carrier indicator field is equal to a second preset value.

In the example of the present invention, the first preset value may be 0 or 1, and the second preset value may be 0. In the case where the bit value of the target information field is equal to the first preset value and the bit value of the CIF is equal to the second preset value, the terminal takes the primary carrier as the target carrier for the cross-carrier scheduling.

At step 202-12, one secondary carrier is determined from the at least one secondary carrier as the target carrier based on the bit value of the carrier indicator field in the case where the bit value of the target information field is equal to a third preset value.

In the example of the present invention, the third preset value is different from the first preset value. The third preset value may be 0 when the first preset value is 1, and the third preset value may be 1 when the first preset value is 0. If the bit value of the target information field is equal to the third value, the terminal may directly determine one secondary carrier from the at least one secondary carrier as the target carrier based on the bit value of the carrier indicator field.

In an optional example, the target DCI includes the carrier indicator field which indicates the carrier identifier of the target carrier.

Accordingly, by referring to FIG. 4, which is a flowchart of another cross-carrier scheduling method according to the example illustrated in FIG. 2, step 202 may include the following steps.

At step 202-21, a target carrier identifier corresponding to the bit value of the carrier indicator field in the target DCI is determined in accordance with correspondences between bit values of the carrier indicator field and the carrier identifier of the primary carrier and the carrier identifier of each secondary carrier.

In the example of the present invention, the terminal may determine the target carrier identifier corresponding to the bit value of the carrier indicator field in the target DCI directly in accordance with the above correspondences.

At step 202-22, the target carrier is determined based on the target carrier identifier.

In the example of the present invention, the terminal may take the carrier corresponding to the target carrier identifier as the target carrier.

In the above examples of the present invention, the terminal may determine the scheduled target carrier based on the target information field in conjunction with the carrier indicator field included in the target DCI. Alternatively, the terminal may determine the scheduled target carrier based on the carrier indicator field included in the target DCI, which is simple but has a high availability.

In an optional example, the terminal may determine the above correspondences according to a predefined configuration, e.g., an agreement in a protocol. Alternatively, the terminal may receive a target signaling sent by the base station, such as an RRC signaling which includes the above correspondences configured by the base station. In the above example of the present invention, when determining the scheduled target carrier based on the carrier indicator field included in the target DCI, the terminal may determine the target carrier in accordance with the correspondences between the bit values of the carrier indicator field and the carrier identifier of the primary carrier and the carrier identifier of each secondary carrier. The correspondences may be determined according to the predefined configuration, or the correspondences which are transmitted by the base station through the target signaling may be received. Thereby, it achieves the purpose of scheduling, via a secondary carrier, the primary carrier or another secondary carrier in the cross-carrier way.

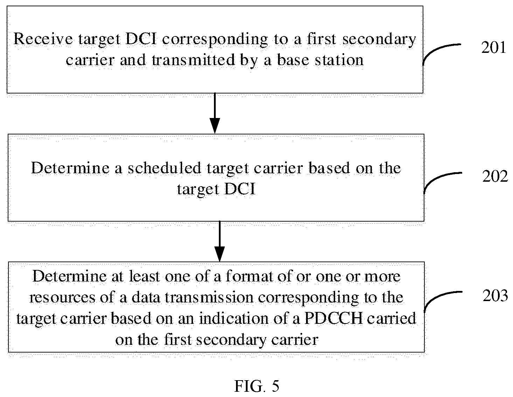

In an optional example, by referring to FIG. 5, which is a flowchart of another cross-carrier scheduling method according to the example illustrated in FIG. 2, the method, after step 202, may further include:
determining at least one of a format of or one or more resources of a data transmission corresponding to the target carrier based on an indication of a PDCCH carried on the first secondary carrier.

In the example of the present invention, the format of the data transmission corresponding to the target carrier may be one data transmission format determined by the terminal from a plurality of preset data transmission formats based on the indication of the PDCCH, and the one or more resources of the data transmission corresponding to the target carrier include, but are not limited to, at least one of PDSCH resources or PUSCH resources of the target carrier.

In the above example, after determining the target carrier for the cross-carrier scheduling based on the received target DCI corresponding to the first secondary carrier, the terminal may further determine at least one of the format of or the one or more resources of the data transmission corresponding to the target carrier based on the indication of the PDCCH carried on the first secondary carrier, which achieves the purpose of scheduling, via a secondary carrier, the primary carrier or another secondary carrier in the cross-carrier way.

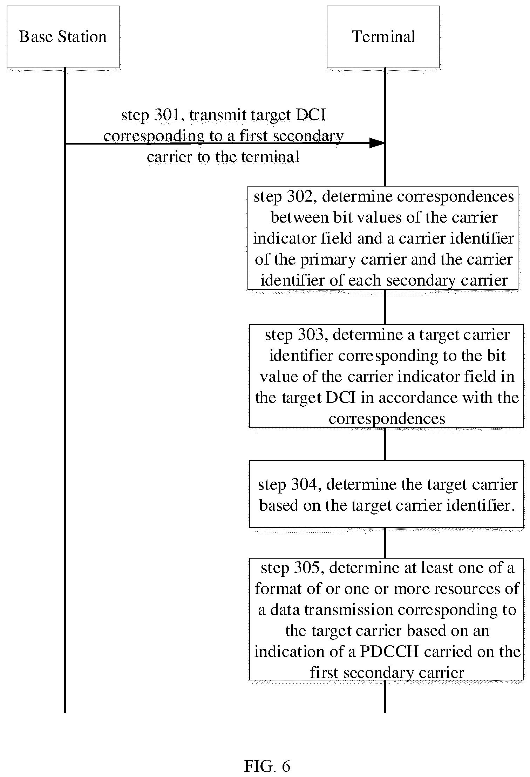

In an optional example, by referring to FIG. 6, which is a flowchart of another cross-carrier scheduling method according to an example, the method may include the following steps.

At step 301, the base station transmits target DCI corresponding to a first secondary carrier to the terminal.

The first secondary carrier is any one of at least one secondary carrier for communication between the base station and the terminal. The target DCI indicates a target carrier that is scheduled by a PDCCH carried on the first secondary carrier. The target carrier is a primary carrier for communication between the base station and the terminal or a second secondary carrier among the at least one secondary carrier.

The target DCI includes a target information field and a carrier indicator field which jointly indicate a carrier identifier of the target carrier.

At step 302, the terminal determines correspondences between bit values of the carrier indicator field and a carrier identifier of the primary carrier and a carrier identifier of each secondary carrier.

At step 303, the terminal determines a target carrier identifier corresponding to the bit value of the carrier indicator field in the target DCI in accordance with the correspondences.

At step 304, the terminal determines the target carrier based on the target carrier identifier.

At step 305, the terminal determines at least one of a format of or one or more resources of a data transmission corresponding to the target carrier based on an indication of a PDCCH carried on the first secondary carrier.

In the above example, it achieves the purpose of scheduling, via a secondary carrier, the primary carrier or another secondary carrier in the cross-carrier way, which, especially in DSS scenarios, effectively alleviates the problem of insufficient PDCCH resources of the primary carrier.

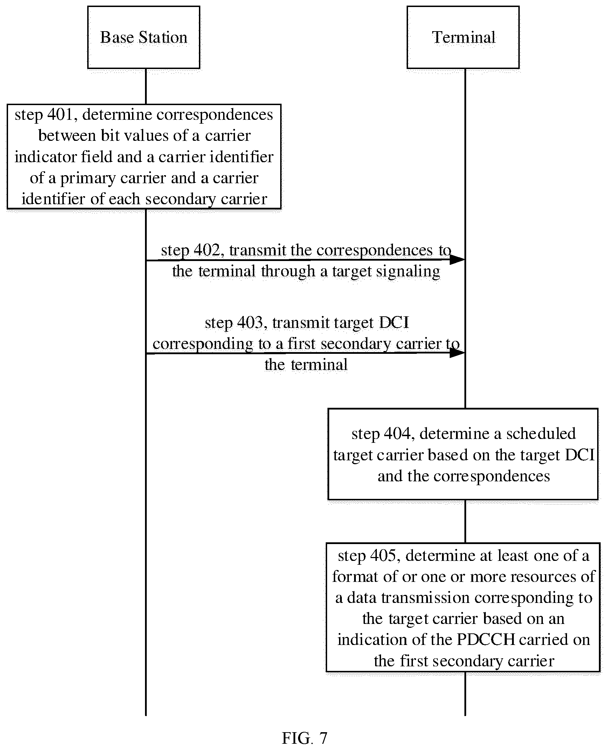

In an optional example, by referring to FIG. 7, which is a flowchart of another cross-carrier scheduling method according to an example, the method may include the following steps.

At step 401, the base station determines correspondences between bit values of a carrier indicator field and a carrier identifier of a primary carrier and a carrier identifier of each secondary carrier.

At step 402, the base station transmits the correspondences to the terminal through a target signaling.

At step 403, the base station transmits target DCI corresponding to a first secondary carrier to the terminal.

The first secondary carrier is any one of at least one secondary carrier for communication between the base station and the terminal. The target DCI indicates a target carrier that is scheduled by a PDCCH carried on the first secondary carrier. The target carrier is the primary carrier for communication between the base station and the terminal or a second secondary carrier among the at least one secondary carrier.

The target DCI includes a target information field and a carrier indicator field which jointly indicate a carrier identifier of the target carrier.

At step 404, the terminal determines a scheduled target carrier based on the target DCI and the correspondences.

In the example of the present invention, in the case where a bit value of the target information field is equal to a first preset value and the bit value of the carrier indicator field is equal to a second preset value, the primary carrier is taken as the target carrier. In the case where the bit value of the target information field is equal to a third preset value, one secondary carrier is determined from the at least one secondary carrier as the target carrier based on the bit value of the bit value of the carrier indicator field.

At step 405, the terminal determines at least one of a format of or one or more resources of a data transmission corresponding to the target carrier based on an indication of the PDCCH carried on the first secondary carrier.

In the above example, it achieves the purpose of scheduling, via a secondary carrier, the primary carrier or another secondary carrier in the cross-carrier way, which, especially in DSS scenarios, effectively alleviates the problem of insufficient PDCCH resources of the primary carrier.

Corresponding to the foregoing method examples implementing application functions, the present invention further provides apparatus examples implementing application functions.

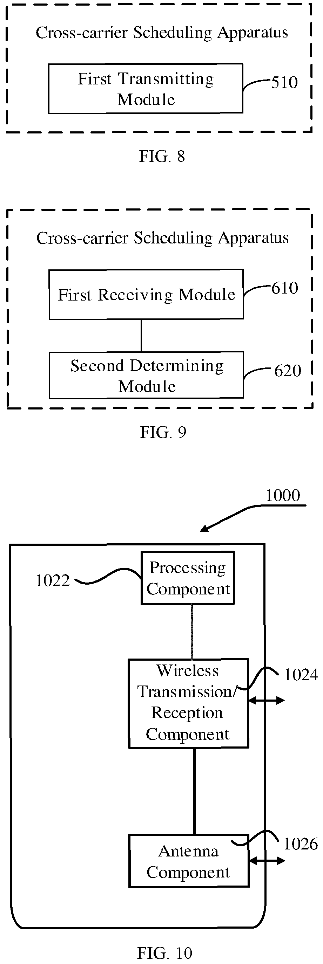

By referring to FIG. 8, which illustrates a block diagram of a cross-carrier scheduling apparatus according to an example, the apparatus is applicable to a base station, including:
a first transmitting module 510 that is configured to transmit target DCI corresponding to a first secondary carrier to a terminal,
where the first secondary carrier is any one of at least one secondary carrier for communication between the base station and the terminal, where the target DCI indicates a target carrier that is scheduled by a physical downlink control channel (PDCCH) carried on the first secondary carrier, and where the target carrier is a primary carrier for communication between the base station and the terminal or a second secondary carrier among the at least one secondary carrier.

Optionally, the target DCI includes a target information field and a carrier indicator field which jointly indicate a carrier identifier of the target carrier.

Optionally, the target DCI includes the carrier indicator field which indicates the carrier identifier of the target carrier.

Optionally, the apparatus further includes:
a first determining module that is configured to determine correspondences between bit values of the carrier indicator field and the carrier identifier of the primary carrier and the carrier identifier of each secondary carrier; and
a second transmitting module that is configured to transmit the correspondences to the terminal through a target signaling.

Optionally, the target DCI is for at least one of a format of or one or more resources of a data transmission corresponding to the target carrier that is scheduled by the PDCCH carried on the first secondary carrier.

By referring to FIG. 9, which illustrates a block diagram of a cross-carrier scheduling apparatus according to an example, the apparatus is applicable to a terminal, including:
a first receiving module 610 that is configured to receive target downlink control information (DCI) corresponding to a first secondary carrier and transmitted by a base station, where the first secondary carrier is any one of at least one secondary carrier for communication between the base station and the terminal; and
a second determining module 620 that is configured to determine a scheduled target carrier based on the target DCI, where the target carrier is a primary carrier for communication between the base station and the terminal or a second secondary carrier among the at least one secondary carrier.

Optionally, the target DCI includes a target information field and a carrier indicator field which jointly indicate a carrier identifier of the target carrier.

The second determining module includes:
a first determining submodule that is configured to take the primary carrier as the target carrier in response to determining that a bit value of the target information field is equal to a first preset value and a bit value of the carrier indicator field is equal to a second preset value; and
a second determining submodule that is configured to determine one secondary carrier from the at least one secondary carrier as the target carrier based on the bit value of the carrier indicator field in response to determining that the bit value of the target information field is equal to a third preset value.

Optionally, the target DCI includes a carrier indicator field which indicates a carrier identifier of the target carrier; and
the second determining module includes:
a third determining submodule that is configured to determine a target carrier identifier corresponding to a bit value of the carrier indicator field in the target DCI in accordance with correspondences between bit values of the carrier indicator field and the carrier identifier of the primary carrier and the carrier identifier of each secondary carrier; and
a fourth determining submodule that is configured to determine the target carrier based on the target carrier identifier.

Optionally, the apparatus further includes:
a fourth determining module that is configured to determine the correspondences according to a predefined configuration; or
a second receiving module that is configured to receive the correspondences transmitted by the base station through a target signaling.

Optionally, the apparatus further includes:
a third determining module that is configured to determine at least one of a format of or one or more resources of a data transmission corresponding to the target carrier based on an indication of a PDCCH carried on the first secondary carrier.

Since the apparatus examples essentially correspond to the method examples, reference may be made to the description of related parts of the method examples. The apparatus examples described above are merely illustrative, in which the modules described as separate components may or may not be physically separated, and the components displayed as modules may or may not be physical units, that is, may be located in one place or distributed to a plurality of units in a network. Some or all of the modules may be selected according to actual needs to achieve the purpose of the implementations of the present invention. It can be understood and implemented by those of ordinary skill in the art without any creative effort.

Accordingly, the present invention also provides a computer-readable storage medium storing a computer program, and the computer program is configured to execute any one of the above-described cross-carrier scheduling methods applicable to the base station side.

Accordingly, the present invention also provides a computer-readable storage medium storing a computer program, and the computer program is configured to execute any one of the above-described cross-carrier scheduling methods applicable to the terminal side.

Accordingly, the present invention also provides a cross-carrier scheduling apparatus, including:
one or more processors; and
one or more memories for storing instructions executable by the one or more processors.

The one or more processors are configured to execute any one of the cross-carrier scheduling methods at the base station side.

By referring to FIG. 10, it is a schematic structure diagram of a cross-carrier scheduling apparatus 1100 according to an example. The apparatus 1100 may be provided as a base station. As illustrated in FIG. 10, the apparatus 1100 includes a processing component 1022, a wireless transmission/reception component 1024, an antenna component 1026, and a signal processing part peculiar to a wireless interface. The processing component 1022 may further include one or more processors.

One of the processors in the processing component 1022 may be configured to execute any one of the cross-carrier scheduling methods at the base station side.

Accordingly, the present invention also provides a cross-carrier scheduling apparatus, including:
one or more processors; and
one or more memories for storing instructions executable by the one or more processors.

The one or more processors are configured to execute any one of the cross-carrier scheduling methods at the terminal side.

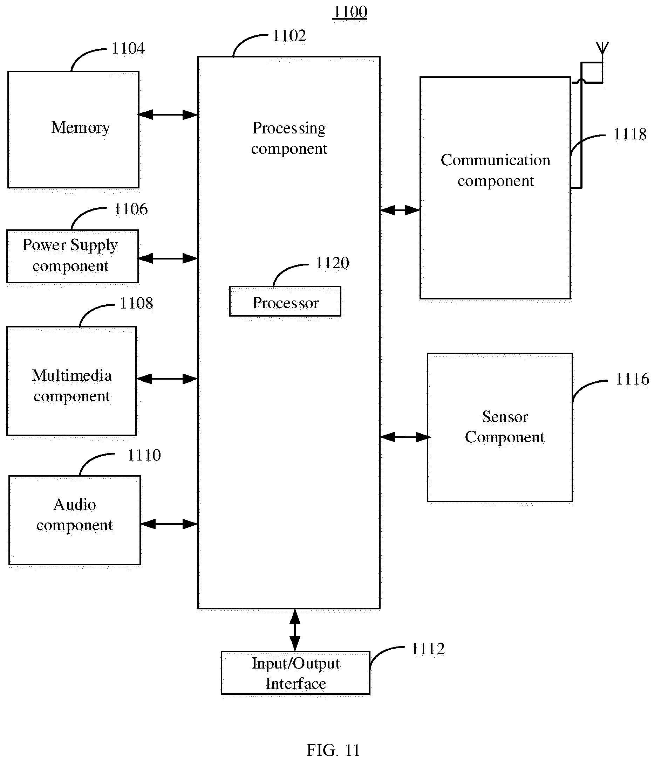

FIG. 11 illustrates a block diagram of an electronic device 1100 according to an example. For example, the electronic device 1100 may be a terminal such as a mobile phone, a tablet, an e-book reader, a multimedia player, a wearable device, an in-vehicle terminal, an ipad, a smart TV.

As illustrated in FIG. 10, the electronic device 1100 may include one or more of the following components: a processing component 1102, a memory 1104, a power supply component 1106, a multimedia component 1108, an audio component 1110, an input/output (I/O) interface 1112, a sensor component 1116, and a cross-carrier scheduling component 1118.

The processing component 1102 generally controls the overall operations of the electronic device 1100, such as operations associated with display, phone calls, cross-carrier data scheduling operations, camera operations, and recording operations. The processing component 1102 may include one or more processors 1120 to perform instructions to complete all or a part of the steps of the above cross-carrier scheduling methods. In addition, the processing component 1102 may include one or more modules which facilitate the interaction between the processing component 1102 and other components. As an example, the processing component 1102 may include a multimedia module to facilitate the interaction between the multimedia component 1108 and the processing component 1102. As another example, the processing component 1102 may read executable instructions from the memory to implement the steps of the cross-carrier scheduling method provided by each of the above examples.

The memory 1104 is configured to store various types of data to support the operations of the electronic device 1100. Examples of such data include instructions for any application program or method operated on the electronic device 1100, contact data, phonebook data, messages, pictures, videos, and the like. The memory 1104 may be implemented by any type of volatile or non-volatile storage device or a combination thereof, such as a static random access memory (SRAM), an electrically erasable programmable read-only memory (EEPROM), an erasable and programmable read-only memory (EPROM), a programmable read-only memory (PROM), a read-only memory (ROM), a magnetic memory, a flash memory, a magnetic disk or an optical disk.

The power supply component 1106 provides power for various components of the electronic device 1100. The power supply component 1106 may include a power management system, one or more power supplies, and other components associated with generating, managing, and distributing power for the electronic device 1100.

The multimedia component 1108 includes a screen providing an output interface between the electronic device 1100 and a user. In some examples, the multimedia component 1108 includes a front camera and/or a rear camera. The front camera and/or rear camera may receive external multimedia data when the electronic device 1100 is in an operating mode, such as a photographing mode or a video mode. Each front camera and rear camera may be a fixed optical lens system or have focal length and optical zooming capability.

The audio component 1110 is configured to output and/or input an audio signal. For example, the audio component 1110 includes a microphone (MIC) that is configured to receive an external audio signal when the electronic device 1100 is in an operating mode, such as a call mode, a recording mode, and a voice recognition mode. The received audio signal may be further stored in the memory 1104 or transmitted via the cross-carrier scheduling component 1118. In some examples, the audio component 1110 also includes a speaker for outputting an audio signal.

The I/O interface 1112 provides an interface between the processing component 1102 and a peripheral interface module. The above peripheral interface module may be a keyboard, a click wheel, buttons, or the like. These buttons may include but not be limited to a home button, a volume button, a start button and a lock button.

The sensor component 1116 includes one or more sensors to provide the electronic device 1100 with status assessments in various aspects. For example, the sensor component 1116 may detect an open/closed state of the electronic device 1100 and a relative positioning of components such as the display and keypad of the electronic device 1100, and the sensor component 1116 may also detect a change in position of the electronic device 1100 or of a component of the electronic device 1100, the presence or absence of the user contact with the electronic device 1100, orientation or acceleration/deceleration of the electronic device 1100, and temperature change of the electronic device 1100. The sensor component 1116 may include a proximity sensor configured to detect the presence of a nearby object without any physical contact. The sensor component 1116 may further include an optical sensor, such as a complementary metal-oxide-semiconductor (CMOS) or charged coupled device (CCD) image sensor which is used in imaging applications. In some examples, the sensor component 1116 may also include an acceleration sensor, a gyro sensor, a magnetic sensor, a pressure sensor, or a temperature sensor.

The cross-carrier scheduling component 1118 is configured to facilitate a wired or wireless cross-carrier scheduling between the electronic device 1100 and another device. The electronic device 1100 may access a wireless network based on any cross-carrier scheduling standard, such as WiFi, 2G or 3G, 4G, 5G, 6G or a combination thereof. In one example, the cross-carrier scheduling component 1118 receives broadcast signals or broadcast related information from an external broadcast management system via a broadcast channel. In one example, the cross-carrier scheduling component 1118 also includes a near-field cross-carrier scheduling (NFC) module to facilitate short-range cross-carrier scheduling. For example, the NFC module may be implemented based on a radio frequency identification (RFID) technology, an infrared data association (IrDA) technology, an ultra-wideband (UWB) technology, a Bluetooth^{®} (BT) technology and other technologies.

In one or more examples, the electronic device 1100 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components for performing any one of the above cross-carrier scheduling methods at the terminal side.

In one or more examples, a non-transitory computer-readable storage medium including instructions, e.g., the memory 1104 including instructions, is provided. These instructions may be executed by the one or more processors 1120 of the electronic device 1100 to complete the above wireless charging methods. For example, the non-transitory computer-readable storage medium may be a read-only memory (ROM), a random access memory (RAM), a CD-ROM, a magnetic tape, a floppy disk, an optical data storage device, and the like.

Other implementations of the present invention will be readily apparent to those skilled in the art after implementing the invention by referring to the specification. The present invention is intended to cover any variations, uses, or adaptations of the present invention that are in accordance with the general principles thereof and include common general knowledge or conventional technical means in the art that are not disclosed in the present invention. The description and the examples are only illustrative, and the true scope and spirit of the present invention are set forth in the appended claims.

It should be understood that the present invention is not limited to the above-described accurate structures illustrated in the drawings, and various modifications and changes can be made to the present invention without departing from the scope thereof. The scope of the present invention is to be limited only by the appended claims.

## Claims

1. A cross-carrier scheduling method, being applicable to a base station, comprising:
transmitting target downlink control information, DCI, corresponding to a first secondary carrier to a terminal,
wherein the first secondary carrier is any one of at least one secondary carrier for communication between the base station and the terminal,
wherein the target DCI indicates a target carrier that is scheduled by a physical downlink control channel, PDCCH, carried on the first secondary carrier, and
wherein the target carrier is a primary carrier for communication between the base station and the terminal or a second secondary carrier among the at least one secondary carrier.

2. The method according to claim 1, wherein the target DCI comprises a target information field and a carrier indicator field which jointly indicate a carrier identifier of the target carrier.

3. The method according to claim 1, wherein the target DCI comprises a carrier indicator field which indicates a carrier identifier of the target carrier.

4. The method according to claim 3, further comprising:
determining correspondences between bit values of the carrier indicator field and a carrier identifier of the primary carrier and a carrier identifier of each secondary carrier; and
transmitting the correspondences to the terminal through a target signaling.

5. The method according to any one of claims 1-4, wherein the target DCI indicates at least one of a format of or one or more resources of a data transmission corresponding to the target carrier that is scheduled by the PDCCH carried on the first secondary carrier.

6. A cross-carrier scheduling method, being applicable to a terminal, comprising:
receiving target downlink control information, DCI, corresponding to a first secondary carrier and transmitted by a base station, wherein the first secondary carrier is any one of at least one secondary carrier for communication between the base station and the terminal; and
determining, based on the target DCI, a target carrier that is scheduled, wherein the target carrier is a primary carrier for communication between the base station and the terminal or a second secondary carrier among the at least one secondary carrier.

7. The method according to claim 6, wherein the target DCI comprises a target information field and a carrier indicator field which jointly indicate a carrier identifier of the target carrier; and
wherein determining, based on the target DCI, the target carrier that is scheduled comprises:
taking the primary carrier as the target carrier in response to determining that a bit value of the target information field is equal to a first preset value and a bit value of the carrier indicator field is equal to a second preset value; and
determining one secondary carrier from the at least one secondary carrier as the target carrier based on the bit value of the carrier indicator field in response to determining that the bit value of the target information field is equal to a third preset value.

8. The method according to claim 6, wherein the target DCI comprises a carrier indicator field which indicates a carrier identifier of the target carrier; and
wherein determining, based on the target DCI, the target carrier that is scheduled comprises:
determining a target carrier identifier corresponding to a bit value of the carrier indicator field in the target DCI in accordance with correspondences between bit values of the carrier indicator field and a carrier identifier of the primary carrier and a carrier identifier of each secondary carrier; and
determining the target carrier based on the target carrier identifier.

9. The method according to claim 8, further comprising:
determining the correspondences according to a predefined configuration; or
receiving the correspondences transmitted by the base station through a target signaling.

10. The method according to any one of claims 6-9, wherein after determining the target carrier that is scheduled, the method further comprises:
determining at least one of a format of or one or more resources of a data transmission corresponding to the target carrier based on an indication of a physical downlink control channel, PDCCH, carried on the first secondary carrier.

11. A cross-carrier scheduling apparatus, being applicable to a base station, comprising:
a first transmitting module, configured to transmit target downlink control information, DCI, corresponding to a first secondary carrier to a terminal,
wherein the first secondary carrier is any one of at least one secondary carrier for communication between the base station and the terminal,
wherein the target DCI indicates a target carrier that is scheduled by a physical downlink control channel, PDCCH, carried on the first secondary carrier, and
wherein the target carrier is a primary carrier for communication between the base station and the terminal or a second secondary carrier among the at least one secondary carrier.

12. The apparatus according to claim 11, wherein the target DCI comprises a target information field and a carrier indicator field which jointly indicate a carrier identifier of the target carrier.

13. The apparatus according to claim 11, wherein the target DCI comprises a carrier indicator field which indicates a carrier identifier of the target carrier.

14. The apparatus according to claim 13, further comprising:
a first determining module, configured to determine correspondences between bit values of the carrier indicator field and a carrier identifier of the primary carrier and a carrier identifier of each secondary carrier; and
a second transmitting module, configured to transmit the correspondences to the terminal through a target signaling.

15. The apparatus according to any one of claims 11-14, wherein the target DCI is for at least one of a format of or one or more resources of a data transmission corresponding to the target carrier that is scheduled by the PDCCH carried on at least the first secondary carrier.

16. A cross-carrier scheduling apparatus, being applicable to a terminal, comprising:
a first receiving module, configured to receive target downlink control information, DCI, corresponding to a first secondary carrier and transmitted by a base station, wherein the first secondary carrier is any one of at least one secondary carrier for communication between the base station and the terminal; and
a second determining module, configured to determine, based on the target DCI, a target carrier that is scheduled, wherein the target carrier is a primary carrier for communication between the base station and the terminal or a second secondary carrier among the at least one secondary carrier.

17. The apparatus according to claim 16, wherein the target DCI comprises a target information field and a carrier indicator field that which j ointly indicate a carrier identifier of the target carrier; and
wherein the second determining module comprises:
a first determining submodule, configured to take the primary carrier as the target carrier in response to determining that a bit value of the target information field is equal to a first preset value and a bit value of the carrier indicator field is equal to a second preset value; and
a second determining submodule, configured to determine one secondary carrier from the at least one secondary carrier as the target carrier based on the bit value of the carrier indicator field in response to determining that the bit value of the target information field is equal to a third preset value.

18. The apparatus according to claim 16, wherein the target DCI comprises a carrier indicator field which indicates a carrier identifier of the target carrier; and
wherein the second determining module comprises:
a third determining submodule, configured to determine a target carrier identifier corresponding to a bit value of the carrier indicator field in the target DCI in accordance with correspondences between bit values of the carrier indicator field and a carrier identifier of the primary carrier and a carrier identifier of each secondary carrier; and
a fourth determining submodule, configured to determine the target carrier based on the target carrier identifier.

19. The apparatus according to claim 18, further comprising:
a fourth determining module, configured to determine the correspondences according to a predefined configuration; or
a second receiving module, configured to receive the correspondences transmitted by the base station through a target signaling.

20. The apparatus according to any one of claim 6-9, further comprising:
a third determining module, configured to determine at least one of a format of or one or more resources of a data transmission corresponding to the target carrier based on an indication of a physical downlink control channel, PDCCH, carried on the first secondary carri er.

21. A computer-readable storage medium storing a computer program, wherein the computer program is configured to execute the cross-carrier scheduling method according to any one of claims 1-5.

22. A computer-readable storage medium storing a computer program, wherein the computer program is configured to execute the cross-carrier scheduling method according to any one of claims 6-10.

23. A cross-carrier scheduling apparatus, comprising:
one or more processors; and
one or more memories for storing instructions executable by the one or more processors;
wherein the one or more processors are configured to perform the cross-carrier scheduling method according to any one of claims 1-5.

24. A cross-carrier scheduling apparatus, comprising:
one or more processors; and
one or more memories for storing instructions executable by the one or more processors;
wherein the one or more processors are configured to perform the cross-carrier scheduling method according to any one of claims 6-10.
